# EUROPEAN PATENT APPLICATION

(11) **EP 4 293 593 A1**
(43) Date of publication of application: **20.12.2023**
(21) Application number: 23177491.0
(22) Date of filing: 06.06.2023
(51) Int. Cl.: G06Q 10/1093, G06Q 10/0631, A01D 34/00

(54) **DISPLAY FOR SCHEDULING OPERATION OF A ROBOTIC GARDEN TOOL**

(30) Priority: 13.06.2022 US 202263351691 P
(71) Applicant: Techtronic Cordless GP, Anderson, SC 29621 (US)
(72) Inventor: LEE, Chi Chau, Kwai Chung (HK)
(74) Representative: Zimmermann & Partner Patentanwälte mbB

(57) **Abstract**

An external device that may include a display and a device network interface configured to allow the external device to wirelessly communicate with one or more robotic garden tools. The external device may be configured to display a scheduling screen on the display. The scheduling screen may include a first display area including a calendar that includes a plurality of time blocks. Each time block may represent a time period during which a first robotic garden tool is scheduled to operate. The scheduling screen may include a second display area including first scheduling information about a selected time block. The first scheduling information and the selected time block may be editable via user inputs. The user inputs change the scheduling information or the time block, and the external device also correspondingly changes the other of the scheduling information or the time block in response to the user inputs.

## Description

### RELATED APPLICATIONS

This application claims priority to U.S. Provisional Application No. 63/351,691, filed on June 13, 2022 (Attorney Docket No.: 206737-9057-US02), the entire contents of which are hereby incorporated by reference.

### FIELD

The present disclosure relates to robotic garden tools, particularly to display for scheduling operation of a robotic garden tool.

### SUMMARY

One embodiment includes an external device that may include a display, and a device network interface configured to allow the external device to wirelessly communicate with one or more robotic garden tools. The external device may include an electronic processor coupled to the display and to the device network interface. The electronic processor may be configured to communicate with the one or more robotic garden tools via the device network interface. The electronic processor may be further configured to display a scheduling screen on the display. The scheduling screen may include information related to a first robotic garden tool of the one or more robotic garden tools. The scheduling screen may include a first display area including a calendar that includes a plurality of time blocks. Each time block may represent a time period during which the first robotic garden tool is scheduled to operate. The scheduling screen may include a second display area including first scheduling information about a selected time block. The first scheduling information may be editable via a first user input in the second display area. The electronic processor may be configured to change the selected time block included in the first display area in accordance with a first edit made to the first scheduling information via the first user input. The selected time block may be editable via a second user input in the first display area. The electronic processor may be configured to change the first scheduling information included in the second display area in accordance with a second edit made to the selected time block.

In addition to any combination of features described above, the first display area may be located above the second display area, and the second display area may be displayed in response to the selected time block being selected via a third user input.

In addition to any combination of features described above, the plurality of time blocks may include a first type of time block that indicates a first type of operation is scheduled during a first respective time period associated with each time block of the first type of time block. The plurality of time blocks may include a second type of time block that indicates a second type of operation is scheduled during a second respective time period associated with each time block of the second type of time block. The second type of operation may include at least one difference compared to the first type of operation, and the second type of time block may be different than the first type of time block.

In addition to any combination of features described above, the first type of operation may include a general operational state of the first robotic garden tool, and the second type of operation may include a perimeter cutting state of the first robotic garden tool.

In addition to any combination of features described above, the first type of time block and the second type of time block may be different than each other in terms of at least one of color, shape, outline, and labeling.

In addition to any combination of features described above, the second display area may include a perimeter cutting option configured to be selected via a third user input to select between the first type of operation and the second type of operation.

In addition to any combination of features described above, the second user input to edit the selected time block may include at least one of (i) dragging and dropping an entirety of the selected time block to reschedule at least one of a day and the time period associated with the selected time block; (ii) dragging and dropping at least one of a top end and a bottom end of the selected time block to reschedule at least one of a start time of the selected time block and an end time of the selected time block; and (iii) dragging and dropping at least one of a left side and a right side of the selected time block to generate a second time block during at least one other day, wherein the second time block includes at least one similar characteristic as the selected time block.

In addition to any combination of features described above, the at least one similar characteristic may include a type of operation that is configured to be performed by the first robotic garden tool and the time period associated with the selected time block.

In addition to any combination of features described above, the electronic processor may be configured to determine that the second time block conflicts with a previously scheduled time block. In response to determining that the second time block conflicts with the previously scheduled time block, the electronic processor may be configured to remove the second time block from a conflicted time period that at least partially overlaps with the previously scheduled time block.

In addition to any combination of features described above, the first scheduling information displayed in the second display area may include the time period associated with the selected time block and one or more days of a week associated with the selected time block.

Another embodiment includes a method of displaying information related to a robotic garden tool. The method may include displaying, on a display of an external device, a scheduling screen including information related to a first robotic garden tool of one or more robotic garden tools with which the external device is configured to wirelessly communicate via a device network interface of the external device. The scheduling screen may include a first display area including a calendar that includes a plurality of time blocks. Each time block may represent a time period during which the first robotic garden tool is scheduled to operate. The scheduling screen may include a second display area including first scheduling information about a selected time block. The method may further include receiving a first user input in the second display area. The method may further include in response to receiving the first user input in the second display area, editing the first scheduling information based on the first user input, and changing, with an electronic processor of the external device, the selected time block included in the first display area in accordance with a first edit made to the first scheduling information via the first user input. The method may further include receiving a second user input in the first display area. The method may further include in response to receiving the second user input in the first display area, editing the selected time block based on the second user input, and changing, with the electronic processor, the first scheduling information included in the second display area in accordance with a second edit made to the selected time block.

In addition to any combination of features described above, the plurality of time blocks may include a first type of time block that indicates a first type of operation is scheduled during a first respective time period associated with each time block of the first type of time block. The plurality of time blocks may include a second type of time block that indicates a second type of operation is scheduled during a second respective time period associated with each time block of the second type of time block. The second type of operation may include at least one difference compared to the first type of operation, and the second type of time block may be different than the first type of time block.

In addition to any combination of features described above, the first type of operation may include a general operational state of the first robotic garden tool, and the second type of operation may include a perimeter cutting state of the first robotic garden tool.

In addition to any combination of features described above, the first type of time block and the second type of time block may be different than each other in terms of at least one of color, shape, outline, and labeling.

In addition to any combination of features described above, the second display area may include a perimeter cutting option configured to be selected via a third user input to select between the first type of operation and the second type of operation.

In addition to any combination of features described above, receiving the second user input may include detecting, with the electronic processor, at least one of (i) dragging and dropping an entirety of the selected time block to reschedule at least one of a day and the time period associated with the selected time block; (ii) dragging and dropping at least one of a top end and a bottom end of the selected time block to reschedule at least one of a start time of the selected time block and an end time of the selected time block; and (iii) dragging and dropping at least one of a left side and a right side of the selected time block to generate a second time block during at least one other day, wherein the second time block includes at least one similar characteristic as the selected time block.

Another embodiment includes a communication system that may include a first robotic garden tool. The first robotic garden tool may include a first network interface configured to allow the first robotic garden tool to wirelessly communicate with an external device. The first robotic garden tool may include a first electronic processor coupled to the first network interface. The first electronic processor may be configured to receive first scheduling information, via the first network interface, from the external device, and control the first robotic garden tool based on the first scheduling information. The communication system may also include the external device that may include a display, and a second network interface configured to allow the external device to wirelessly communicate with the first robotic garden tool. The external device may include a second electronic processor coupled to the display and to the second network interface. The second electronic processor may be configured to communicate with the first robotic garden tool via the second network interface. The second electronic processor may be configured to display a scheduling screen on the display. The scheduling screen may include information related to the first robotic garden tool. The scheduling screen may include a first display area including a calendar that includes a plurality of time blocks. Each time block may represent a time period during which the first robotic garden tool is scheduled to operate. The scheduling screen may include a second display area including the first scheduling information about a selected time block. The first scheduling information may be editable via a first user input in the second display area. The second electronic processor may be configured to change the selected time block included in the first display area in accordance with a first edit made to the first scheduling information via the first user input. The selected time block may be editable via a second user input in the first display area. The second electronic processor may be configured to change the first scheduling information included in the second display area in accordance with a second edit made to the selected time block. The second electronic processor may be further configured to transmit, via the second network interface, the first scheduling information to the first robotic garden tool.

In addition to any combination of features described above, the first electronic processor of the first robotic garden tool may be configured to transmit at least a portion of the information related to the first robotic garden tool, via the first network interface, to the external device. The at least a portion of the information related to the first robotic garden tool may include previously stored scheduling information of the first robotic garden tool.

In addition to any combination of features described above, the plurality of time blocks may include a first type of time block that indicates a first type of operation is scheduled during a first respective time period associated with each time block of the first type of time block. The plurality of time blocks may include a second type of time block that indicates a second type of operation is scheduled during a second respective time period associated with each time block of the second type of time block. The second type of operation may include at least one difference compared to the first type of operation, and the second type of time block may be different than the first type of time block.

In addition to any combination of features described above, the second user input to edit the selected time block may include at least one of (i) dragging and dropping an entirety of the selected time block to reschedule at least one of a day and the time period associated with the selected time block; (ii) dragging and dropping at least one of a top end and a bottom end of the selected time block to reschedule at least one of a start time of the selected time block and an end time of the selected time block; and (iii) dragging and dropping at least one of a left side and a right side of the selected time block to generate a second time block during at least one other day, wherein the second time block includes at least one similar characteristic as the selected time block.

Other aspects of the disclosure will become apparent by consideration of the detailed description and accompanying drawings.

### BRIEF DESCRIPTION OF THE DRAWINGS

FIG. 1A illustrates a communication system including a robotic garden tool according to some example embodiments.
FIG. 1B illustrates a bottom perspective view of the robotic garden tool of FIG. 1A according to some example embodiments.
FIG. 2 is a block diagram of the robotic garden tool of FIGS. 1A and 1B according to some example embodiments.
FIG. 3 is a block diagram of the external device of FIG. 1A according to some example embodiments.
FIG. 4 illustrates a flowchart of a method that may be performed by the robotic garden tool and the external device of FIG. 1A to communicate with each other according to some example embodiments.
FIGS. 5A-5I illustrate screenshots of example screens/graphical user interfaces that may be displayed on a second display of the external device of FIG. 1A according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components and/or paths of travel of a robotic garden tool. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

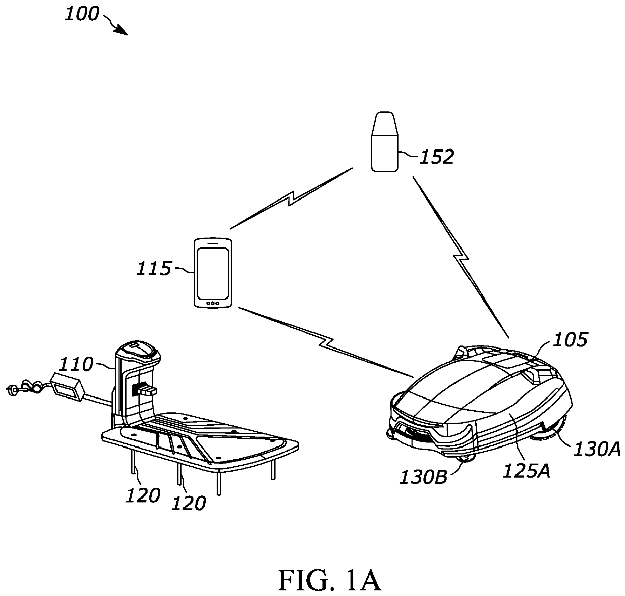

FIG. 1A illustrates a communication system 100 that may include a robotic garden tool 105 (e.g., a robotic lawn mower 105 that may also be referred to as a robotic mower 105), a docking station 110 for the robotic mower 105, an external device 115, and a server 152 according to some example embodiments. The robotic garden tool 105 is primarily described as being a robotic lawn mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the robotic garden tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool 105 (e.g., fertilizer to treat grass in the lawn). In some embodiments, a lawn may include paved portions of a property (e.g., a driveway), for example, when the robotic garden tool 105 is used for snow plowing/removal.

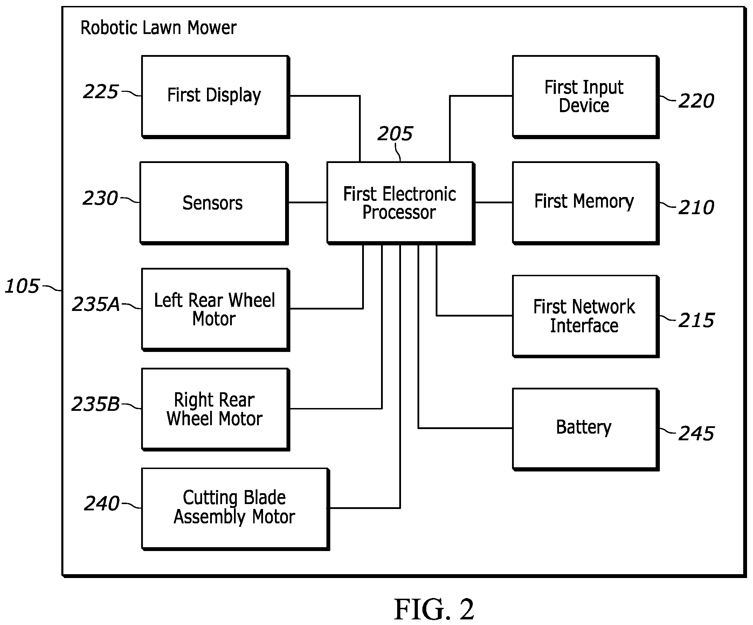

In some embodiments, the docking station 110 may be installed in a yard/lawn using stakes 120. The robotic mower 105 may be configured to mow the yard and dock at the docking station 110 in order to charge a battery 245 of the robotic mower 105 (see FIG. 2). In some embodiments, the docking station 110 is configured to make an electrical connection with a power supply (e.g., via a cord and plug connected to a wall outlet that is connected to a power grid) in order to provide charging current to the robotic mower 105 when the robotic mower 105 is electrically coupled with the docking station 110.

In some embodiments, the docking station 110 may also be electrically connected to a boundary cable (i.e., boundary wire). In some embodiments, the docking station 110 provides power to the boundary cable to control the boundary cable to provide/emit, for example, an electromagnetic signal that may be detected by the robotic mower 105. In some embodiments, the boundary cable may be any cable, wire, etc. that is configured to transmit a signal and that is configured to be installed on an operating surface (e.g., a yard including grass) in a discrete and unobtrusive manner (e.g., secured at the base of the blades of grass against the ground/soil in which the grass is growing to prevent the robotic mower 105 and other people or objects from being physically obstructed by the boundary cable). For example, a plurality of pegs/stakes may be used to pin the boundary cable to the ground/soil. As another example, the boundary cable may be buried in the ground/soil underneath the grass (e.g., if the boundary cable is installed when a plot of land is being developed). In some embodiments, in response to detecting the electromagnetic signal from the boundary cable, the robotic mower 105 is configured to control its movement such that the robotic mower 105 remains within a boundary defined by the boundary cable. For example, in response to detecting the boundary cable, the robotic mower 105 may be configured to stop moving forward and turn in a random direction to begin traveling in an approximately straight line until the robotic mower 105 again detects the boundary cable.

In some embodiments, the robotic mower 105 does not operate in conjunction with a boundary cable. Rather, the robotic mower 105 may include mapping capabilities, positioning tracking capabilities, and/or the like that allow the robotic mower 105 to remain within a predefined boundary (e.g., a virtual boundary) without the use of the boundary cable.

In some embodiments, the docking station 110 includes a docking cable loop, a magnet configured to be sensed by a magnetic sensor of the robotic mower 105, and/or another transmitting device configured to emit a docking signal that may be detected by the robotic mower 105. For example, the docking signal may indicate that the robotic mower 105 is near the docking station 110 and may allow the robotic mower 105 to take certain actions in response thereto to, for example, dock the robotic mower 105 at the docking station 110.

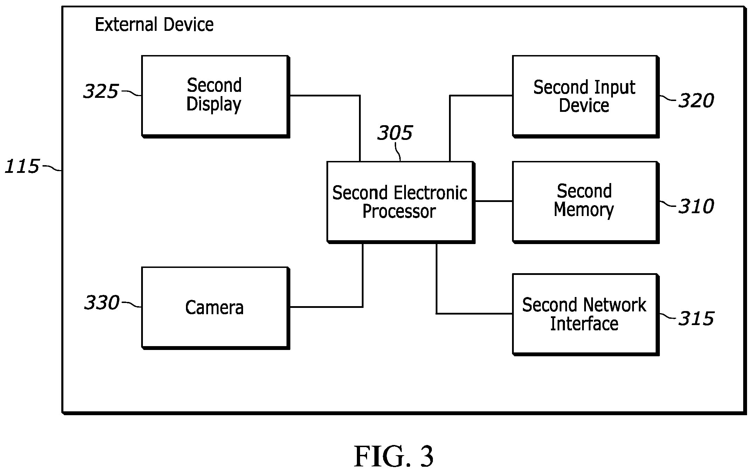

As indicated in FIG. 1A, in some embodiments, the robotic mower 105 is configured to bidirectionally wirelessly communicate with the external device 115 and/or the server 152. In some embodiments, the robotic mower 105 is configured to directly communicate with the external device 115 when the robotic mower 105 is within communication range of the external device 115 (e.g., via Bluetooth^{™}, WiFi^{™}, or the like). In some embodiments, the robotic mower 105 is additionally or alternatively configured to communicate with the external device 115 via an intermediary device such as the server 152, a cellular communication tower/base station, another device in a cellular network, or the like (e.g., when the robotic mower 105 is outside of direct communication range with the external device 115). The external device 115 may be, for example, a smart phone (as illustrated), a laptop computer, a tablet computer, a personal digital assistant (PDA), a wireless communication router that allows another external device 115 that is located remotely from the robotic mower 105 to communicate with the robotic mower 105, or another electronic device capable of communicating with the robotic mower 105. The external device 115 may generate a user interface on a display (e.g., second display 325 of FIG. 3) and allow a user to access and interact with robotic mower information. The external device 115 may receive user inputs to determine operational parameters/instructions for the robotic mower 105, enable or disable features of the robotic mower 105, and the like. In some embodiments, the communication between the external device 115 and the robotic mower 105 may be wired (e.g., via a Universal Serial Bus (USB) cord configured to connect to respective USB ports of the external device 115 and the robotic mower 105).

While FIG. 1A illustrates one robotic mower 105, one charging station 110, and one external device 115, in some embodiments, the communication system 100 includes fewer or more devices (e.g., only a single robotic mower 105 and a single external device 115; or additional robotic mowers 105, charging stations 110, and/or external devices 115). In some embodiments, a single external device 115 may be configured to communicate with multiple robotic mowers 105 to control and/or monitor the multiple robotic mowers 105. While FIG. 1A illustrates one server 152, in some embodiments, the communication system 100 includes additional servers 152. In some embodiments, the communication system 100 may not include any servers 152. While not shown in FIG. 1A, as mentioned above, in some embodiments, the communication system 100 may include a network such as a cellular network that includes one or more devices that act as an intermediary device to allow the robotic mower 105 to bidirectionally communicate with the external device 115 when the robotic mower 105 and the external device 115 are not within direct communication range of each other.

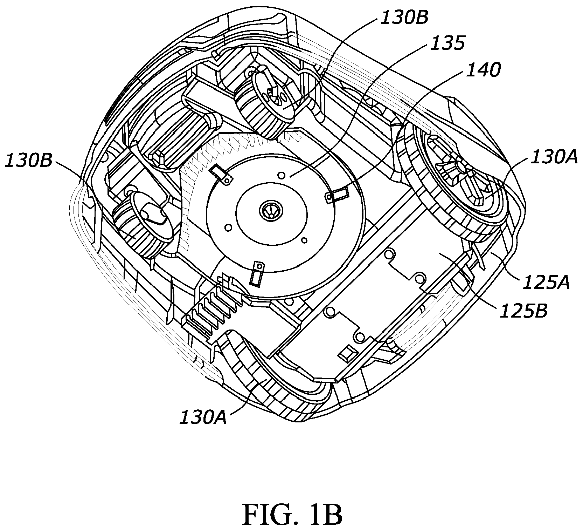

FIG. 1B illustrates a bottom perspective view of the robotic mower 105 according to some example embodiments. The robotic mower 105 may include a housing 125 that may include an outer housing 125A (i.e., outer housing shell) and an inner housing 125B. The outer housing 125A may be coupled to the inner housing 125B. The robotic mower 105 also may include wheels 130 (i.e., a set of wheels 130) coupled to the inner housing 125B and configured to rotate with respect to the housing 125 to propel the robotic mower 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic mower 105 may include a different wheel arrangement (e.g., a different number of total wheels, a different number of each type of wheel, different wheels being motor-driven or non-motor-driven, and/or the like). In some embodiments, the housing 125 may not include the outer housing 125A and the inner housing 125B. Rather, the housing 125 may include a single integrated body/housing to which the wheels 130 are attached.

In some embodiments, the robotic mower 105 includes a wheel motor 235 (see FIG. 2) coupled to one or more wheels 130 and configured to drive rotation of the one or more wheels 130. In some embodiments, the robotic mower 105 includes multiple wheel motors 235 where each wheel motor 235 is configured to drive rotation of a respective motor-driven wheel 130A (see FIG. 2).

In some embodiments, the robotic mower 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the robotic mower 105 includes a cutting blade assembly motor 240 (see FIG. 2) coupled to the inner housing 125B and to the cutting blade assembly 135. The cutting blade assembly motor 240 may be configured to drive rotation of the cutting blade assembly 135 to cut the grass on the operating surface.

In some embodiments, the robotic mower 105 and/or the docking station 110 include additional components and functionality than is shown and described herein.

FIG. 2 is a block diagram of the robotic mower 105 according to some example embodiments. In the embodiment illustrated, the robotic mower 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230, a left rear wheel motor 235A, a right rear wheel motor 235B, a cutting blade assembly motor 240, and a battery 245. In some embodiments, the robotic mower 105 includes fewer or additional components in configurations different from that illustrated in FIG. 2. For example, the robotic mower 105 may not include the first input device 220 and/or the first display 225. As another example, the robotic mower 105 may include a location tracking device (e.g., a global positioning system (GPS) receiver) and/or a height adjustment motor configured to adjust a height of the cutting blade assembly 135. As yet another example, the robotic mower 105 may include additional sensors or fewer sensors than the sensors 230 described herein. In some embodiments, the robotic mower 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from other devices in the communication system 100 (e.g., the external device 115, the server 152, etc.). In some embodiments, the first network interface 215 includes one or more transceivers for wirelessly communicating with the external device 115 and/or the docking station 110 (e.g., a first radio frequency (RF) transceiver configured to communicate via Bluetooth^{™}, WiFi^{™}, or the like). The first network interface 215 may include an additional transceiver for wirelessly communicating with the server 152 via, for example, cellular communication. In some embodiments, at least some of the transceivers and/or receivers of the robotic mower 105 may be combined or share some elements (e.g., an antenna and/or other hardware). Alternatively or additionally, the first network interface 215 may include a connector or port for receiving a wired connection to the external device 115, such as USB cable.

The first user input device 220 is configured to allow the first electronic processor 205 to receive a user input from a user to, for example, set/adjust an operational parameter of the robotic mower 105. The first display 225 is configured to display a user interface to the user. Similar to the user interface of the external device 115 described previously herein, the user interface displayed on the first display 225 may allow the user to access and interact with robotic mower information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, other magnetic sensors, a transceiver/receiver of the first network interface 215, and/or the like.

In some embodiments, the inner housing 125B includes at least two boundary cable sensors in the form of electromagnetic field sensors configured to detect an electromagnetic signal being emitted by the boundary cable. For example, the electromagnetic field sensors may be able to detect a strength and/or a polarity of the electromagnetic signal from the boundary cable.

In some embodiments, the inner housing 125B includes an odometry sensor (e.g., one or more Hall sensors or other types of sensors) for each motor-driven wheel 130A. Data from the odometry sensors may be used by the first electronic processor 205 to determine how far each wheel 130A has rotated and/or how fast each wheel 130A is rotating in order to accurately control movement (e.g., turning capabilities) of the robotic mower 105. For example, the first electronic processor 205 may control the robotic mower 105 to move in an approximately straight line by controlling both of the wheel motors 235A and 235B to rotate at approximately the same speed. As another example, the first electronic processor 205 may control the robotic mower 105 to turn and/or pivot in a certain direction by controlling one of the wheel motors 235A or 235B to rotate faster than or in an opposite direction than the other of the wheel motors 235A or 235B. Similarly, rotating only one of the wheel motors 235A or 235B while the other wheel motor 235A or 235B is not rotated should result in the robotic mower 105 turning/pivoting.

In some embodiments, the inner housing 125B includes a cutting blade assembly motor sensor (e.g., one or more Hall sensors or other types of sensors). Data from the cutting blade assembly motor sensor may be used by the first electronic processor 205 to determine how fast the cutting blade assembly 135 is rotating.

In some embodiments, the battery 245 provides power to the first electronic processor 205 and to other components of the robotic mower 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery 245 to the other components, the first electronic processor 205 may control whether power is provided to one or more of the other components using, for example, a respective switch (e.g., a field-effect transistor) or a respective switching network including multiple switches. In some embodiments, the robotic mower 105 includes active and/or passive conditioning circuitry (e.g., voltage step-down controllers, voltage converters, rectifiers, filters, etc.) to regulate or control the power received by the components of the robotic mower 105 (e.g., the first electronic processor 205, the motors, 235A, 235B, 240, etc.) from the battery 245. In some embodiments, the battery 245 is a removable battery pack. In some embodiments, the battery 245 is configured to receive charging current from the docking station 110 when the robotic mower 105 is docked at the docking station 110 and electrically connected thereto.

FIG. 3 is a block diagram of the external device 115 according to some example embodiments. In the example shown, the external device 115 includes a second electronic processor 305 electrically connected to a second memory 310, a second network interface 315 (i.e., device network interface 315), a second user input device 320, a second display 325, and a camera 330. These components are similar to the like-named components of the robotic mower 105 explained above with respect to FIG. 2 and function in a similar manner as described above. For example, the second display 325 may also function as an input device (e.g., when the second display 325 is a touchscreen). In some embodiments, the second network interface 315 includes one or more transceivers for wirelessly communicating with the robotic mower 105 (e.g., a second RF transceiver configured to communicate via Bluetooth^{™}, WiFi^{™}, or the like). The second network interface 315 may include an additional transceiver for wirelessly communicating with the server 152 via, for example, cellular communication. The second network interface 315 may also include a second GPS receiver configured to receive a location signal from one or more satellites. In some embodiments, at least some of the transceivers and/or receivers of the external device 115 may be combined or share some elements (e.g., an antenna and/or other hardware). In some embodiments, the second electronic processor 305 sends data to and receives data from the robotic mower 105 and/or other devices of the communication system 100 via the second network interface 315. In some embodiments, the camera 330 is an optical camera configured to capture one or more images.

In some embodiments, the external device 115 includes fewer or additional components in configurations different from that illustrated in FIG. 3. For example, the external device 115 may include a battery, another GPS receiver, or the like. In some embodiments, the external device 115 performs functionality other than the functionality described below.

In some embodiments, the server 152 includes similar elements as at least some of the elements described above with respect to the devices 105, 115 that function in a similar manner. For example, the server 152 may include an electronic processor, a memory, and a network interface, among other elements.

In some embodiments, the robotic mower 105 travels within a virtual boundary of the operating area to execute a task (e.g., mowing a lawn). The robotic mower 105 may travel randomly within the operating area defined by the virtual boundary. For example, the robotic mower 105 may be configured to travel in an approximate straight line until the robotic mower 105 determines that it has reached the virtual boundary. In response to detecting the virtual boundary, the robotic mower 105 may be configured to turn in a random direction and continue traveling in an approximate straight line along a new path until the robotic mower 105 again determines that it has reached the virtual boundary, at which point this process repeats. In some embodiments, the robotic mower 105 may travel in a predetermined pattern within the operating area defined by the virtual boundary (e.g., in adjacent rows or columns between sides of the virtual boundary) to more efficiently and evenly mow the lawn within the operating area. In such embodiments, the robotic mower 105 may determine and keep track of its current location within the operating area.

In some embodiments, the robotic mower 105 may be scheduled to operate (e.g., perform a particular task such as mowing a lawn) during certain time periods. For example, the first memory 210 of the robotic mower 105 may store scheduling information that may be received via the first input device 220 and/or from the external device 115 or the server 152 via wireless communication. Scheduling information for one or more robotic mowers 105 may additionally or alternatively be stored in the second memory 310 of the external device 115, in a memory of the server 152, and/or in a memory of the docking station 110. Such scheduling information that is stored externally of the robotic mower 105 may be accessed by the robotic mower 105 via wired or wireless communication with the device storing the scheduling information. For example, the robotic mower 105 may communicate with the docking station 110 via a wired connection (e.g., terminals configured to connect the robotic mower 105 and the docking station 110 when the robotic mower 105 is docked on the docking station 110). As another example, the robotic mower 105 may wirelessly communicate with the external device 115 and/or the server 152 as described previously herein.

In some embodiments, the robotic mower 105 includes a timer and/or a real-time clock that may be implemented by the first electronic processor 205. The first electronic processor 205 may use stored scheduling information and/or retrieved scheduling information to control times at which the robotic mower 105 is configured to operate, dock, etc. In some embodiments, the robotic mower 105 includes an uninterruptible power source (UPS) in addition to the battery 245. For example, the UPS may be a button/coin cell battery that may be charged by the battery 245 when the battery 245 is coupled to the robotic mower 105. The UPS may additionally or alternatively be charged by the docking station 110 when the robotic mower 105 is docked at the docking station 110. In some embodiments, the UPS may provide power to a memory (e.g., a volatile memory) that stores scheduling information and/or may provide power to the timer, for example, when the battery 245 is depleted or removed from the robotic mower 105. In some embodiments, the timer and/or the memory in which scheduling information is stored may be separate from the first electronic processor 205 or may be included as a separate portion of the second electronic processor 205. In such embodiments, the UPS may provide power to the timer and the separate/separately portioned memory but not to the entire first electronic processor 205 (e.g., an entire microcontroller) in order to extend an amount of time that the UPS can provide power to the timer and the separate/separately portioned memory without needing to be recharged.

In some embodiments, during operation, the first electronic processor 205 of the robotic mower 105 may determine that the robotic mower 105 should return to the docking station 110. For example, the first electronic processor 205 may make such a determination in response to determining that a charge level of the battery 245 is below a predetermined threshold, in response to determining that inclement weather is occurring (e.g., based on detecting high humidity or rain, etc.), or in response to determining that a scheduled time period for operation has elapsed or is about to elapse.

As indicated by the above explanation, the robotic mower 105 may be in any one of a plurality of states at any given time. In some embodiments, the plurality of states include a general operational state, a paused state, a perimeter cutting state, a docking state, a charging state, a standby state, and an error state. Each of these states is explained below.

In some embodiments, in the general operational state, the robotic mower 105 is operating to perform a particular task within the operating area. For example, the robotic mower 105 may be mowing a lawn when the robotic mower 105 is in the general operational state.

In some embodiments, in the paused state, the robotic mower 105 has paused its operation of performing the particular task and is not engaging in any other movement or task. For example, in the paused state, the wheel motors 235 and the cutting blade assembly motor 240 may be stopped, and the robotic mower 105 may remain stationary within the operating area without performing any task. However, in the paused state, the robotic mower 105 may be ready to operate and capable of operating, for example, in response to receiving a command from the external device 115 indicating that the robotic mower 105 should continue to operate.

In some embodiments, the perimeter cutting state is similar to the general operational state but also includes the robotic mower 105 periodically engaging in perimeter cutting of a boundary/perimeter of the operating area. For example, every thirty minutes the robotic mower 105 may engage in perimeter cutting of the boundary/perimeter of the operating area and then may continue mowing the rest of the operating area. In the general operational state, the robotic mower 105 may not engage in perimeter cutting.

In some embodiments, the docking state is a state in which the robotic mower 105 is returning to the docking station 110, for example, for one of the reasons explained previously herein. In some embodiments, the cutting blade assembly motor 240 may be stopped during a portion of the docking state or during the entire docking state. In some embodiments, the cutting blade motor 240 may continue to spin to mow the lawn during a portion of the docking state.

In some embodiments, in the charging state, the robotic mower 105 is docked on the docking station 110 and is receiving charging current from the docking station 110 to charge the battery 245 of the robotic mower 105.

In some embodiments, in the standby state, the robotic mower 105 is docked on the docking station 110 but is not receiving charging current from the docking station 110. In the standby state, the battery 245 of the robotic mower 105 may be fully charged or may have a charge level above a predetermined threshold (e.g., 80%, 90%, etc.). In the standby state, the robotic mower 105 may be ready to operate, for example in response to receiving a command, in response to a scheduled operation time beginning, etc.

In some embodiments, in the error state, the electronic processor 205 has detected some sort of error and prevents the robotic mower 105 from operating or moving until the error is addressed or subsides. For example, all motors of the robotic mower 105 may be disabled and the robotic mower 105 may not be able to continue to operate until the error is addressed, for example, by a user. As another example, the cutting blade motor 240 may be disabled in the error state but the wheel motors 235 may be operable to allow the robotic mower 105 to return to the docking station 110. In this situation, the robotic mower 105 may simultaneously be in the error state and the docking state when the robotic mower 105 is moving back to docking station 110 to dock. In some embodiments, the robotic mower 105 may be in the error state while the robotic mower 105 is docked at the docking station 110 and/or when the robotic mower 105 is not docked at the docking station 110. In some embodiments, in the error state, the robotic mower 105 may not be ready/able to perform a task to enter one of the above-noted states until the error is addressed (e.g., by a user) or until the error is no longer occurring.

In some embodiments, example errors that cause the robotic mower 105 to enter the error state include one or a combination of overtemperature of a component of the robotic mower 105, overcurrent of a component of the robotic mower 105, humidity above a predetermined humidity threshold as detected by a humidity sensor of the robotic mower 105, poor weather conditions (e.g., precipitation, high winds, high temperature, etc.) detected by a sensor 230 of the robotic mower 105 or as determined based on the robotic mower 105 receiving weather information from the external device 115 or the server 152, and/or the like.

As indicated above, one or more robotic garden tools may be scheduled to operate at different times according to scheduling information that is locally stored on the robotic garden tool and/or remotely stored at another device. Additionally, at different times, the one or more robotic garden tools may be scheduled to perform different types of operation (e.g., operate in different states such as the general operational state and the perimeter cutting state). Furthermore, desired operating times of one or more robotic garden tools may change on a day-to-day, week-to-week, or month-to-month basis. Accordingly, it may be difficult for a user to keep track of and/or revise/adjust scheduling information for one or more robotic garden tools. Thus, there is a technological problem related to monitoring and revising/adjusting scheduled operation times of a robotic garden tool.

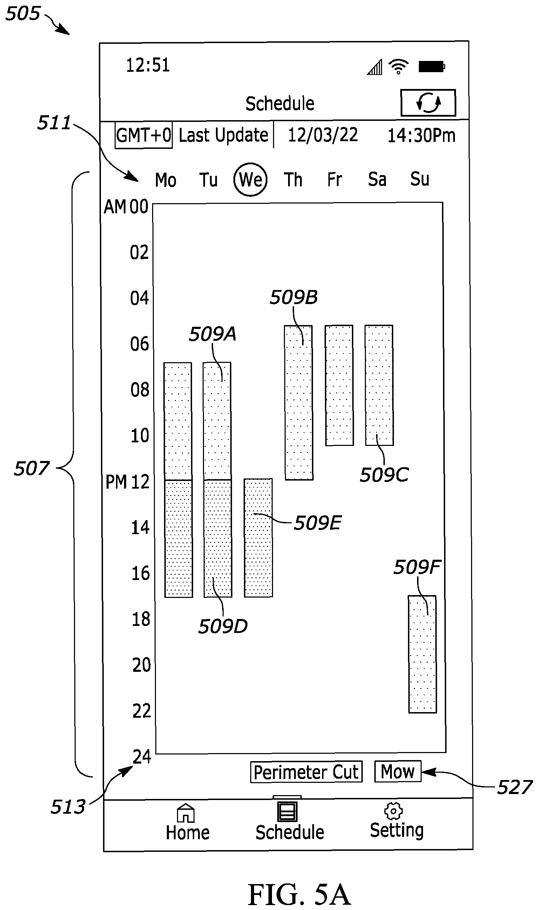

The systems, methods, and devices described herein address the above-noted technological problem by providing a user interface/screen on the second display 325 of the external device 115 to indicate various scheduling details of the robotic mower 105 to the user in an organized fashion. The user interfaces/screens also allow the user to easily revise/adjust scheduling information of the robotic mower 105. For example, a scheduling screen 505 (see FIGS. 5A-5H) provided on the second display 325 improves user interaction between the robotic mower 105 and the user to allow the user to more efficiently monitor and adjust scheduled operation times of the robotic mower 105 (or of multiple robotic mowers 105).

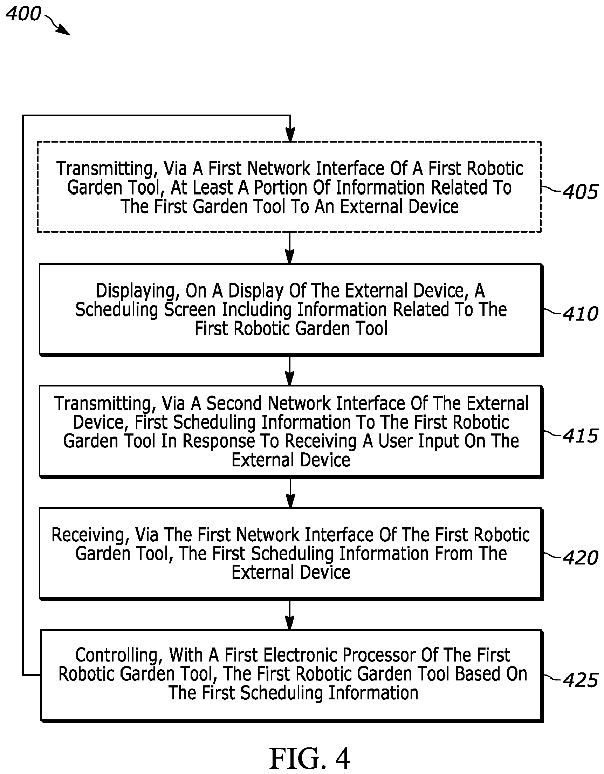

FIG. 4 illustrates a flowchart of a method 400 that may be performed by the robotic mower 105 and the external device 115 to communicate with each other. While a particular order of processing steps, signal receptions, and/or signal transmissions is indicated in FIG. 4 as an example, timing and ordering of such steps, receptions, and transmissions may vary where appropriate without negating the purpose and advantages of the examples set forth in detail throughout the remainder of this disclosure. While the method 400 includes actions performed by each of the robotic mower 105 and the external device 115, it should be understood that separate methods may be performed by only one of these devices 105, 115 where these separate methods include only the blocks executed by the respective device 105, 115.

At block 410, the second electronic processor 305 of the external device 115 displays, on the second display 325 of the external device 115, a scheduling screen 505 including information related to the first robotic garden tool 105 (e.g., the robotic mower 105). For example, FIGS. 5A-5H illustrate example screenshots of a scheduling screen 505 that are explained in further detail below.

As indicated by the dashed outline of block 405, in some embodiments, at block 405, the first electronic processor 205 of the robotic mower 105 transmits, via the first network interface 215, at least a portion of the information related to a first robotic garden tool 105 (e.g., the robotic mower 105) to the external device 115. For example, the information may include previously stored scheduling information of the robotic mower 105 that was stored on the first memory 210 and/or other information. In other words, the robotic mower 105 may provide current scheduling information according to which the robotic mower 105 is configured to operate to the external device 115 to allow a user to view and/or adjust the scheduling information on the external device 115.

At block 415, the second electronic processor 305 of the external device 115 transmits, via the second network interface 315 of the external device 115, first scheduling information to the first robotic garden tool 105 (e.g., the robotic mower 105) in response to receiving a user input on the external device 115. For example, when the second display 325 is a touchscreen, the user input may include adjusting a start time, a stop time, and/or a type of operation of one or more time blocks included in the current scheduling information of the robotic mower 105 as explained in greater detail below with respect to FIGS. 5A-5H. Accordingly, in some embodiments, the first scheduling information may include adjusted scheduling information that adjusts at least one aspect of current scheduling information according to which the robotic mower 105 is configured to operate.

At block 420, the first electronic processor 205 of the robotic mower 105 receives, via the first network interface 215, the first scheduling information from the external device 115. At block 425, the first electronic processor 205 of the robotic mower 105 controls the robotic garden tool 105 (e.g., the robotic mower 105) based on the first scheduling information. For example, after receiving the first scheduling information, the first electronic processor 205 may be configured to control operation, docking, etc. in accordance with scheduled time blocks included in the first scheduling information. In some embodiments, the first electronic processor 205 may update current scheduling information stored in the first memory 210 with the first scheduling information received from the external device 115. In some embodiments, the first electronic processor 205 may delete or overwrite the current scheduling information. Specific examples regarding scheduling of time blocks are included below with respect to FIGS. 5A-5H that illustrate screenshots of screens/graphical user interfaces that are displayed on the second display 325 of the external device 115.

As indicated in FIG. 4, the method 400 may repeat to, for example, allow the external device 115 to continuously/dynamically/periodically receive current scheduling information from one or more robotic mowers 105 and/or transmit new/adjusted scheduling information to the one or more robotic mowers 105.

FIGS. 5A-5I illustrate screenshots of example screens/graphical user interfaces that may be displayed on the second display 325 of the external device 115. FIGS. 5A-5H illustrate a scheduling screen 505 in different situations that are explained below. In some embodiments, the scheduling screen 505 includes information related to a first robotic garden tool 105 (e.g., the robotic mower 105) of a group of one or more robotic garden tools 105. As indicated previously herein, at least some of the information related to the robotic mower 105 that is displayed on the scheduling screen 505 may be wirelessly received by the external device 115 from the robotic mower 105.

In some embodiments, the scheduling screen 505 includes a first display area 507 that may include a calendar that includes a plurality of time blocks 509. Each time block may represent a time period during which the first robotic garden tool (i.e., robotic mower 105) is scheduled to operate. The first display area 507 may be referred to as a calendar overview display area.

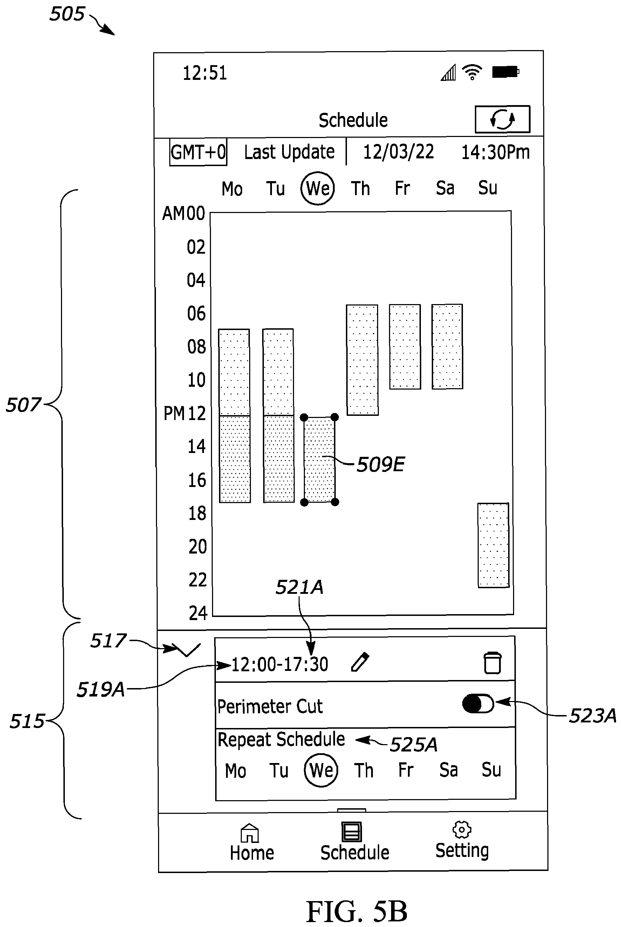

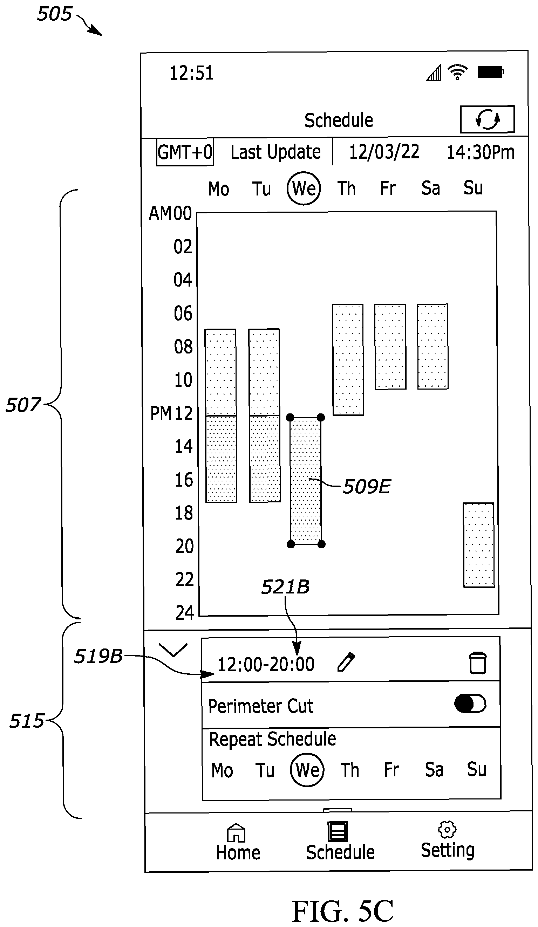

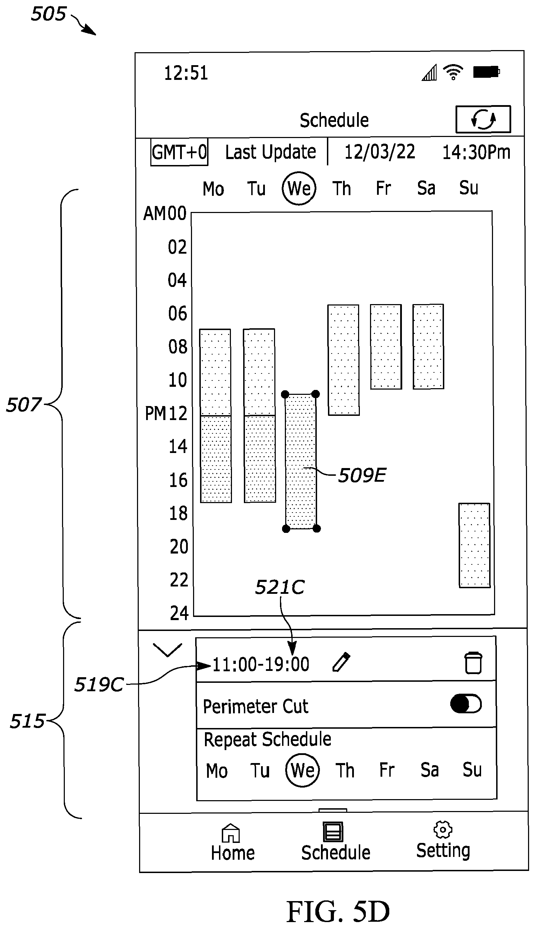

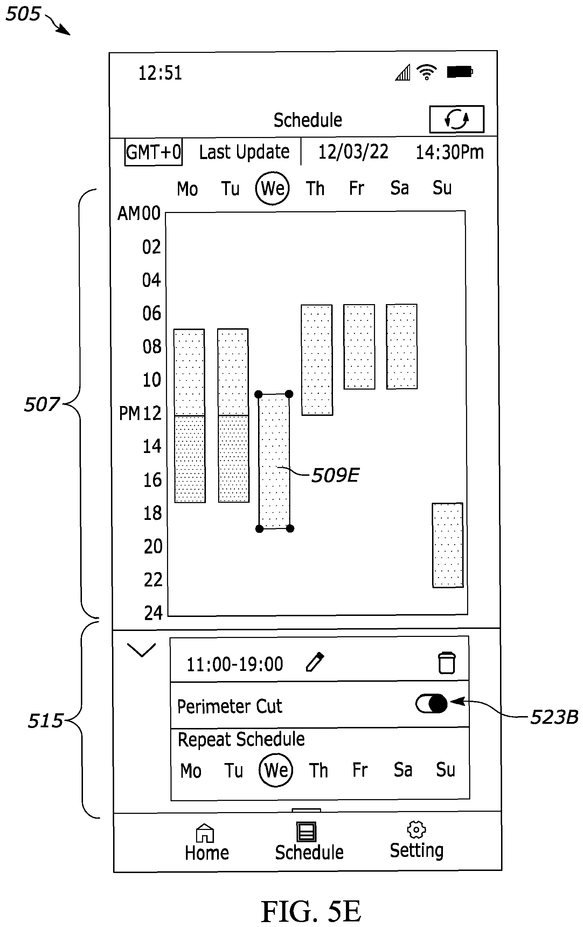

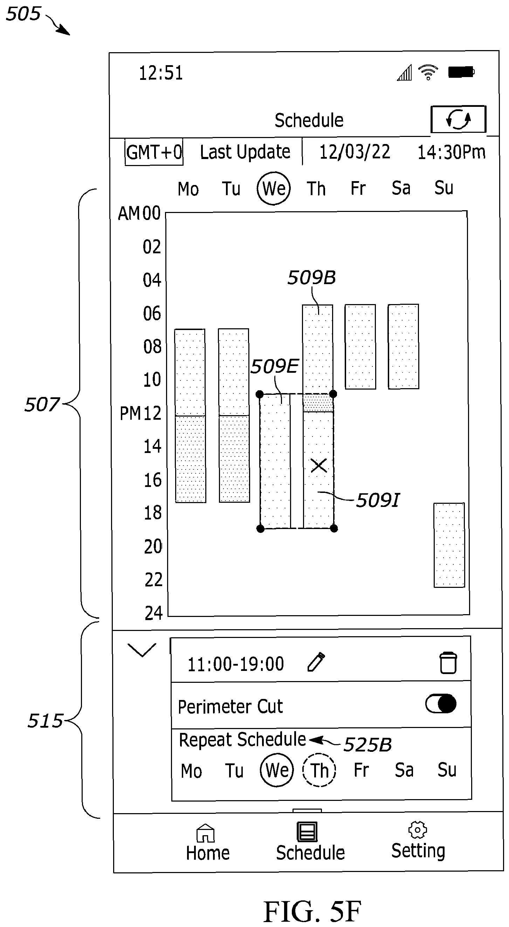

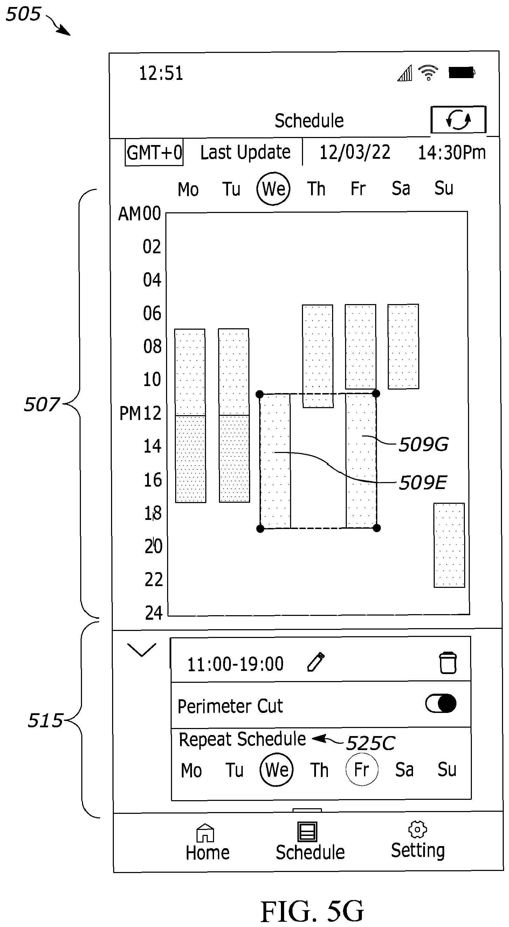

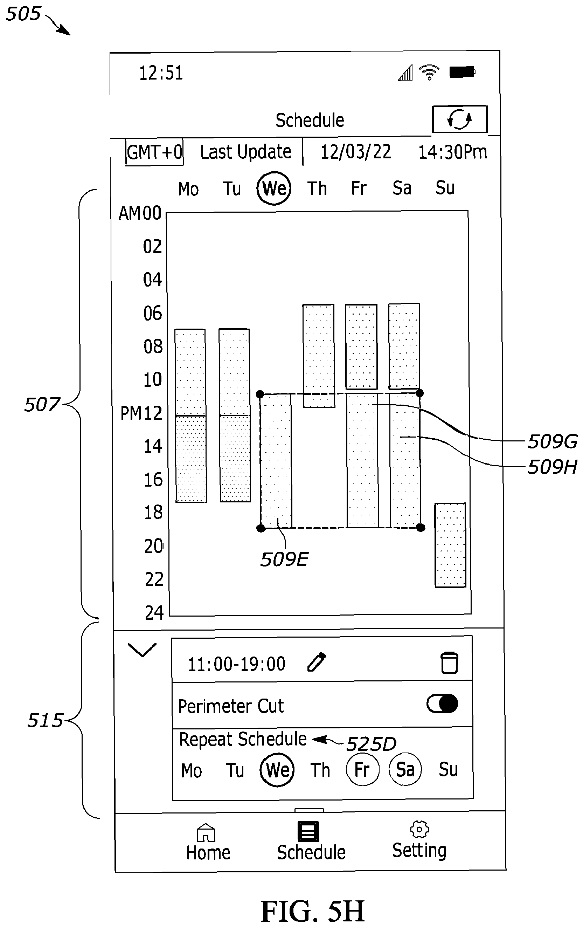

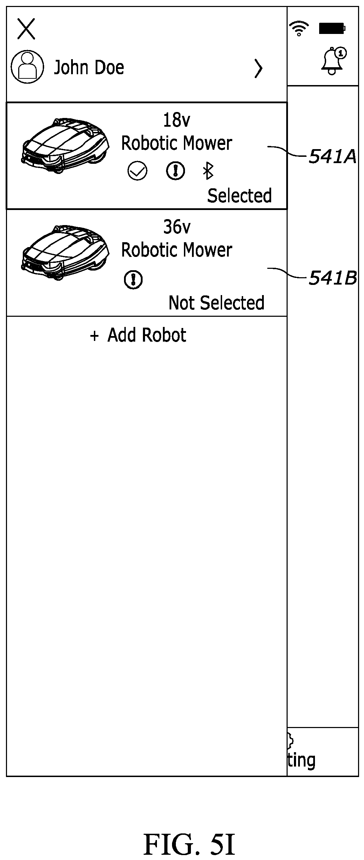

As shown in FIG. 5, the calendar in the first display area 507 may include a first axis 511 (e.g., an x-axis or a horizontal axis) labeled with days of the week. The calendar in the first display area 507 may also include a second axis 513 (e.g., a y-axis or a vertical axis) labeled with hours in a day. Accordingly, each time block 509 displayed in the first display area 507 may correspond to a day of the week, a start time on the day of the week, and an end time on the day of the week.

In some embodiments, in response to a time block 509 (e.g., time block 509E) being selected via a user input, a second display area 515 is displayed on the scheduling screen 505 by the second electronic processor 305. FIG. 5B illustrates the scheduling screen 505 including the second display area 515. In the example shown, the first display area 507 is located above the second display area 515. However, the first display area 507 and the second display area 515 may be displayed in other locations on the scheduling screen 505 with respect to each other. As indicated in FIG. 5B, to allow space on the scheduling screen 505 for the second display area 515 to be displayed, the first display area 507 may be displayed in a smaller size (e.g., at a smaller scale) when the second display area 515 is also displayed. In some embodiments, the first display area 507 may remain at a constant size regardless of whether a time block 509 is selected. For example, the first display area 507 may remain at the size shown in FIG. 5B, and the second display area 515 may be blank or may include general status information of the robotic mower 105 when a time block 509 is not selected. In some embodiments, the second display area 515 may be hidden (e.g., in response to receiving a user input selecting a carrot 517) even when a time block 509 is selected. Such hiding of the second display area 515 may allow the first display area 507 to be displayed in a larger manner/scale (e.g., as shown in FIG. 5A).

In some embodiments, the second display area 515 includes first scheduling information about the selected time block 509E. In some embodiments, the first scheduling information displayed in the second display area 515 includes a time period associated with the selected time block 509E and one or more days of a week associated with the selected time block 509E. For example, the first scheduling information includes a start time 519 and an end time 521 of the selected time block 509E that coincide with corresponding times (e.g., a time period) of the selected time block 509E shown in the first display area 507. The first scheduling information may also include repeat schedule information 525 that indicates days of the week on which the selected time block 509E is scheduled to occur. These days in the repeat schedule information 525 also coincide with corresponding days of the selected time block 509E shown in the first display area 507. The first scheduling information may also include a selectable option such as a perimeter cutting option 523 that indicates a type of operation (e.g., operating state) from among a plurality of types of operation that the robotic mower 105 is configured to perform during the selected time block 509E. For example, the perimeter cutting option 523 is not selected (i.e., toggled off) in FIG. 5B. Accordingly, in the example shown in FIG. 5B, during the selected time block 509E, the robotic mower 105 is configured to operate in the general operational state explained previously herein rather than in the perimeter cutting state explained previously herein.

In some embodiments, the plurality of time blocks 509 displayed in the first display area 507 includes a first type of time block 509D, 509E that indicates a first type of operation is scheduled during a first respective time period associated with each time block 509D, 509E of the first type of time block 509D, 509E (e.g., a general operational state). In some embodiments, the plurality of time blocks 509 displayed in the first display area 507 also includes a second type of time block 509A, 509B, 509C, 509F that indicates a second type of operation is scheduled during a second respective time period associated with each time block 509A, 509B, 509C, 509F of the second type of time block 509A, 509B, 509C, 509F (e.g., a perimeter cutting state). The second type of operation (e.g., a perimeter cutting state) may include at least one difference compared to the first type of operation (e.g., a general operational state). For example, a perimeter cutting task may be periodically performed during the perimeter cutting state but not during the general operational state as explained previously herein. Additionally, the second type of time block may be different than the first type of time block. In some embodiments, the first type of time block 509D, 509E and the second type of time block 509A, 509B, 509C, 509F are different than each other in terms of at least one of color, shape, outline, and labeling (e.g., text inside the time blocks 509). For example, the time blocks 509 are color-coded or otherwise displayed in the first display area 507 in a manner that indicates a respective type of operation for each time block 509. For example, FIG. 5A shows a key 527 that indicates that a first color of a time block 509A, 509B, 509C, 509F indicates a "mow" state (i.e., a general operational state) while a second color of a time block 509A, 509B, 509C, 509F indicates a perimeter cutting operation/state.

As shown in FIG. 5B, to indicate that the selected time block 509E has been selected, the selected time block 509E is displayed with dots/grabbing points in its corners. In some embodiments, the second electronic processor 305 is configured to additionally or alternatively change colors/shades and/or change an outline (e.g., bolding an outline) of the selected time block 509E to indicate that the selected time block 509E has been selected.

In some embodiments, the first scheduling information is editable via a first user input in the second display area 515. For example, the start time 519 and/or the end time 521 may be editable in response to a user input that selects a pen icon located next to the end time 521. As another example, the repeat schedule information 525 may be editable in response to receiving a user input that selects an unselected day or de-selects a selected day included in the repeat schedule information 525. As shown in the example of FIG. 5B, only "We" (which represented Wednesday) is selected in the repeat schedule information 525. As yet another example of the first scheduling information being editable, the perimeter cutting option 523 is configured to be selected via a user input to select between a first type of operation (e.g., a general operational state) and a second type of operation (e.g., a perimeter cutting state). As shown in the example of FIG. 5B, the perimeter cutting option 523 is not selected. Thus, the selected time block 509E is currently associated with the general operational state rather than the perimeter cutting state. In some embodiments, the perimeter cutting option 523 may be a "general operating type" option that includes two, three, or more user-selectable operating states.

In some embodiments, the second electronic processor 305 is configured to change/adjust the selected time block 509E included in the first display area 507 (i.e., change a location or a manner in which the selected time block 509E is displayed) in accordance with a first edit made to the first scheduling information via a first user input received in the second display area 515. For example, in FIG. 5C, the end time 521B has been changed to 20:00 from 17:30 (as shown in FIG. 5B). Accordingly, the selected time block 509E displayed in the first display area 507 of FIG. 5C has been extended such that a bottom edge of the selected time block 509E that represents the end time 521 is even with the 20:00 label on the second axis 513. As another example, in FIG. 5D, the start time 519C has been changed to 11:00 from 12:00 (as shown in FIG. 5C), and the end time 521C has been changed to 19:00 from 20:00 (as shown in FIG. 5C). Accordingly, the selected time block 509E displayed in the first display area 507 of FIG. 5D has been changed/adjusted by the second electronic processor 305 such that a top edge of the selected time block 509E that represents the start time 519 is even with the 11:00 mark on the second axis 513 while a bottom edge of the selected time block 509E that represents the end time 521 is even with the 19:00 mark on the second axis 513. In other words, the selected time block 509E has been shifted/translated one hour sooner but maintains the same time duration (e.g., eight hours) as is shown in FIG. 5C.

As yet another example of the second electronic processor 305 changing/adjusting the selected time block 509E included in the first display area 507 in accordance with a first edit made to the first scheduling information via the first user input received in the second display area 515, in FIG. 5E, the perimeter cutting option 523B has been changed to be selected instead of being unselected (as shown in FIG. 5D). Accordingly, the selected time block 509E displayed in the first display area 507 of FIG. 5D has been changed/altered such that the selected time block 509E is displayed as a different type of time block 509 that indicates that the time block 509E is associated with the perimeter cutting state. For example, the selected time block 509E may be changed from a first type of time block 509 associated with a general operational state (e.g., a grey time block 509) to a second type of time block associated with the perimeter cutting state (e.g., a green time block 509).

In some embodiments, the second electronic processor 305 is configured to delete a selected time block 509 in response to receiving a user input that selects a "garbage can" icon displayed in the second display area 515 (e.g., shown above the perimeter cutting option 523 in FIGS. 5B-5E). In some embodiments, the scheduling screen 505 may include a user-selectable input that, when selected via a user input, causes the second electronic processor 305 to add a new time block 509 to the first display area 507 in accordance with scheduling information entered in the second display area 515.

In addition to the first scheduling information of a selected time block 509E being editable via a user input in the second display area 515, in some embodiments, the selected time block 509E is editable via a second user input in the first display area 507. For example, a user input to edit the selected time block 509E includes dragging and dropping an entirety of the selected time block 509E to reschedule at least one of a day and a time period associated with the selected time block 509E. With reference to the difference between FIG. 5C and FIG. 5D, a user input may drag the selected time block 509E to be one hour earlier. As another example, a user input to edit the selected time block 509E includes dragging and dropping at least one of a top end and a bottom end of the selected time block 509E to reschedule at least one of a start time 519 of the selected time block 509E and an end time 521 of the selected time block 509E, respectively.

As yet another example, a user input to edit the selected time block 509E includes dragging and dropping at least one of a left side and a right side of the selected time block 509E to generate a second time block 509G, 509H during at least one other day (e.g., as shown in FIGS. 5G and 5H). In some embodiments, the second time block 509G, 509H includes at least one similar characteristic as the selected time block 509E. For example, the at least one similar characteristic may include at least one of a type of operation that is configured to be performed by the first robotic garden tool (e.g., operating in a general operational state or a perimeter cutting state) and the time period associated with the selected time block 509E (e.g., the start time 519 and the end time 521).

As indicated by FIG. 5F, in some embodiments, the second electronic processor 305 is configured to determine that a second time block 509I created during a dragging user input conflicts with a previously scheduled time block 509B. In some embodiments, in response to determining that the second time block 509I conflicts with the previously scheduled time block 509B, the second electronic processor 305 may remove the second time block 509I from a conflicted time period that at least partially overlaps with the previously scheduled time block 509B. For example, as shown in FIGS. 5G and 5H, the second time block 509I is no longer shown because it would overlap with the previously scheduled time block 509B and, thus, would be in a conflicted time period. In some embodiments, the second time block 509I may be displayed briefly (or may remain displayed until the dragging user input is complete) with an indication that the second time block 5091 is in a conflicted time period that at least partially overlaps with the previously scheduled time block 509B. For example, as shown in the example of FIG. 5F, the second time block 509I may be displayed in a different color than the other time blocks 509 (e.g., red) and/or may include a label (e.g., an "x") inside the second time block 509I.

In some embodiments, the second electronic processor 305 is configured to change/adjust the first scheduling information included in the second display area 515 in accordance with a second edit made to the selected time block 509E. For example, as the selected time block 509E is dragged one hour earlier in the first display area 507 as shown by the difference between FIGS. 5C and 5D, the first scheduling information displayed in the second display area 515 is updated correspondingly (e.g., the start time 519C and the end time 521C are updated). As another example, as the selected time block 509E is dragged to other days in the first display area 507 as shown in FIGS. 5F, 5G, and 5H, the repeat schedule information 525B, 525C, and 525D is updated accordingly to indicate that the selected time block 509E is being duplicated in other days of the week. As shown in FIG. 5F, the repeat schedule information 525B may indicate that the second time block 509I conflicts with a previously scheduled time block 509B by showing a circle around the conflicted day in red color and/or in a dashed line. Similar to the explanation of the second time block 509I above, the conflict indication in the repeat schedule information 525B may be displayed briefly (or may remain displayed until the dragging user input is complete) after which the notification may cease to be displayed since the second time block 509I was not actually scheduled/created to be included in the scheduling information.

In some embodiments, any of the information displayed on the scheduling screen 505 may be received via direct or indirect wireless communication from the robotic mower 105. Additionally, any user inputs that set certain scheduling information of the robotic mower 105 may be transmitted in one or more commands to the robotic mower 105 from the external device 115 to be stored by the first memory 210 of the robotic mower 105. In some embodiments, the scheduling information is transmitted by the external device 115 to the robotic mower 105 in response to being set or edited. In some embodiments, the scheduling screen 505 may include a user-selectable "transmit" button that, when selected via a user input, causes the external device 115 to transmit the scheduling information set/adjusted on the external device 115 to the robotic mower 105.

In some embodiments, the scheduling screen 505 (e.g., a top ribbon on the scheduling screen 505) includes a user-selectable menu. In some embodiments, the second electronic processor 305 is configured to display, in response to the user-selectable menu being selected via a user input, a plurality of selectable options 541 as shown in FIG. 5I. Each selectable option 541 may be associated with a different robotic garden tool 105. In some embodiments, a first selectable option 541A is associated with the first robotic garden tool 105 (e.g., the robotic mower 105). The second electronic processor 305 may be configured to display, in response to receiving a selection of the first selectable option 541A of the plurality of selectable options, the scheduling screen 505 of the first robotic garden tool (e.g., the robotic mower 105). The second electronic processor 305 may also be configured to display scheduling screens 505 of other robotic garden tools 105 in response to the other selectable options 541 of other robotic garden tools 105 being selected. Accordingly, a user (e.g., John Doe) with more than one robotic mower 105 may individually monitor and/or adjust the scheduling information of their robotic mowers 105 from a single external device 115.

In some embodiments, the scheduling screen 505 includes a bottom ribbon that includes user-selectable options to view different screens associated with a selected robotic mower 105. For example, a home option, when selected, may cause the external device 115 to display a home screen of the robotic mower 105 that includes status information about the robotic mower 105. The schedule option, when selected, may cause the external device 115 to display the scheduling screen 505 explained previously herein. The settings option, when selected, may cause the external device 115 to display settings of the robotic mower 105 such as serial number, ownership information, communication preferences, notification preferences, etc.

FIGS. 5A-5H do not include reference numbers for every instance of every element. However, it should be apparent from the similarities between these figures that many unlabeled elements correspond to labeled elements of other figures. For example, the perimeter cutting option 523 is not labeled in FIGS. 5F-5H, but it is apparent that the perimeter cutting option 523 is selected in each of these figures.

The embodiments described above and illustrated in the figures are presented by way of example only and are not intended as a limitation upon the concepts and principles of the present invention. As such, it will be appreciated that various changes in the elements and their configuration and arrangement are possible without departing from the spirit and scope of the present invention.

## Claims

1. An external device comprising:
a display;
a device network interface configured to allow the external device to wirelessly communicate with one or more robotic garden tools; and
an electronic processor coupled to the display and to the device network interface and configured to communicate with the one or more robotic garden tools via the device network interface, the electronic processor configured to
display a scheduling screen on the display, wherein the scheduling screen includes information related to a first robotic garden tool of the one or more robotic garden tools,
wherein the scheduling screen includes a first display area including a calendar that includes a plurality of time blocks, each time block representing a time period during which the first robotic garden tool is scheduled to operate,
wherein the scheduling screen includes a second display area including first scheduling information about a selected time block,
wherein the first scheduling information is editable via a first user input in the second display area, and wherein the electronic processor is configured to change the selected time block included in the first display area in accordance with a first edit made to the first scheduling information via the first user input, and
wherein the selected time block is editable via a second user input in the first display area, and wherein the electronic processor is configured to change the first scheduling information included in the second display area in accordance with a second edit made to the selected time block.

2. The external device of claim 1, wherein the first display area is located above the second display area; and
wherein the second display area is displayed in response to the selected time block being selected via a third user input.

3. The external device of claim 1, wherein the plurality of time blocks includes a first type of time block that indicates a first type of operation is scheduled during a first respective time period associated with each time block of the first type of time block; and
wherein the plurality of time blocks includes a second type of time block that indicates a second type of operation is scheduled during a second respective time period associated with each time block of the second type of time block, wherein the second type of operation includes at least one difference compared to the first type of operation, and wherein the second type of time block is different than the first type of time block.

4. The external device of claim 3, wherein the first type of operation includes a general operational state of the first robotic garden tool, and wherein the second type of operation includes a perimeter cutting state of the first robotic garden tool.

5. The external device of claim 3, wherein the first type of time block and the second type of time block are different than each other in terms of at least one of color, shape, outline, and labeling.

6. The external device of claim 3, wherein the second display area includes a perimeter cutting option configured to be selected via a third user input to select between the first type of operation and the second type of operation.

7. The external device of claim 1, wherein the second user input to edit the selected time block includes at least one of
dragging and dropping an entirety of the selected time block to reschedule at least one of a day and the time period associated with the selected time block;
dragging and dropping at least one of a top end and a bottom end of the selected time block to reschedule at least one of a start time of the selected time block and an end time of the selected time block; and
dragging and dropping at least one of a left side and a right side of the selected time block to generate a second time block during at least one other day, wherein the second time block includes at least one similar characteristic as the selected time block.

8. The external device of claim 7, wherein the at least one similar characteristic includes a type of operation that is configured to be performed by the first robotic garden tool and the time period associated with the selected time block.

9. The external device of claim 7, wherein the electronic processor is configured to
determine that the second time block conflicts with a previously scheduled time block; and
in response to determining that the second time block conflicts with the previously scheduled time block, remove the second time block from a conflicted time period that at least partially overlaps with the previously scheduled time block.

10. The external device of claim 1, wherein the first scheduling information displayed in the second display area includes the time period associated with the selected time block and one or more days of a week associated with the selected time block.

11. A method of displaying information related to a robotic garden tool, the method comprising:
displaying, on a display of an external device, a scheduling screen including information related to a first robotic garden tool of one or more robotic garden tools with which the external device is configured to wirelessly communicate via a device network interface of the external device,
wherein the scheduling screen includes a first display area including a calendar that includes a plurality of time blocks, each time block representing a time period during which the first robotic garden tool is scheduled to operate, and
wherein the scheduling screen includes a second display area including first scheduling information about a selected time block;
receiving a first user input in the second display area;
in response to receiving the first user input in the second display area,
editing the first scheduling information based on the first user input, and
changing, with an electronic processor of the external device, the selected time block included in the first display area in accordance with a first edit made to the first scheduling information via the first user input;
receiving a second user input in the first display area; and
in response to receiving the second user input in the first display area,
editing the selected time block based on the second user input, and
changing, with the electronic processor, the first scheduling information included in the second display area in accordance with a second edit made to the selected time block.

12. The method of claim 11, wherein the plurality of time blocks includes a first type of time block that indicates a first type of operation is scheduled during a first respective time period associated with each time block of the first type of time block; and
wherein the plurality of time blocks includes a second type of time block that indicates a second type of operation is scheduled during a second respective time period associated with each time block of the second type of time block, wherein the second type of operation includes at least one difference compared to the first type of operation, and wherein the second type of time block is different than the first type of time block.

13. The method of claim 12, wherein the first type of operation includes a general operational state of the first robotic garden tool, and wherein the second type of operation includes a perimeter cutting state of the first robotic garden tool;
and optionally
wherein the first type of time block and the second type of time block are different than each other in terms of at least one of color, shape, outline, and labeling;
and further optionally
wherein the second display area includes a perimeter cutting option configured to be selected via a third user input to select between the first type of operation and the second type of operation.

14. The method of claim 11, wherein receiving the second user input includes detecting, with the electronic processor, at least one of
dragging and dropping an entirety of the selected time block to reschedule at least one of a day and the time period associated with the selected time block;
dragging and dropping at least one of a top end and a bottom end of the selected time block to reschedule at least one of a start time of the selected time block and an end time of the selected time block; and
dragging and dropping at least one of a left side and a right side of the selected time block to generate a second time block during at least one other day, wherein the second time block includes at least one similar characteristic as the selected time block.

15. A communication system comprising:
a first robotic garden tool including
a first network interface configured to allow the first robotic garden tool to wirelessly communicate with an external device,
a first electronic processor coupled to the first network interface and configured to
receive first scheduling information, via the first network interface, from the external device, and
control the first robotic garden tool based on the first scheduling information; and
the external device including
a display;
a second network interface configured to allow the external device to wirelessly communicate with the first robotic garden tool; and
a second electronic processor coupled to the display and to the second network interface and configured to communicate with the first robotic garden tool via the second network interface, the second electronic processor configured to
display a scheduling screen on the display, wherein the scheduling screen includes information related to the first robotic garden tool,
wherein the scheduling screen includes a first display area including a calendar that includes a plurality of time blocks, each time block representing a time period during which the first robotic garden tool is scheduled to operate,
wherein the scheduling screen includes a second display area including the first scheduling information about a selected time block,
wherein the first scheduling information is editable via a first user input in the second display area, and wherein the second electronic processor is configured to change the selected time block included in the first display area in accordance with a first edit made to the first scheduling information via the first user input, and
wherein the selected time block is editable via a second user input in the first display area, and wherein the second electronic processor is configured to change the first scheduling information included in the second display area in accordance with a second edit made to the selected time block; and
transmit, via the second network interface, the first scheduling information to the first robotic garden tool;
and optionally
wherein the first electronic processor of the first robotic garden tool is configured to transmit at least a portion of the information related to the first robotic garden tool, via the first network interface, to the external device; and
wherein the at least a portion of the information related to the first robotic garden tool includes previously stored scheduling information of the first robotic garden tool;
and further optionally
wherein the plurality of time blocks includes a first type of time block that indicates a first type of operation is scheduled during a first respective time period associated with each time block of the first type of time block; and
wherein the plurality of time blocks includes a second type of time block that indicates a second type of operation is scheduled during a second respective time period associated with each time block of the second type of time block, wherein the second type of operation includes at least one difference compared to the first type of operation, and wherein the second type of time block is different than the first type of time block;
and further optionally
wherein the second user input to edit the selected time block includes at least one of
dragging and dropping an entirety of the selected time block to reschedule at least one of a day and the time period associated with the selected time block;
dragging and dropping at least one of a top end and a bottom end of the selected time block to reschedule at least one of a start time of the selected time block and an end time of the selected time block; and
dragging and dropping at least one of a left side and a right side of the selected time block to generate a second time block during at least one other day, wherein the second time block includes at least one similar characteristic as the selected time block.
